# EUROPEAN PATENT SPECIFICATION

(11) **EP 1 910 846 B1**
(45) Date of publication and mention of the grant of the patent: **02.09.2009**
(21) Application number: 06777991.8
(22) Date of filing: 26.07.2006
(51) Int. Cl.: G01N 35/04, G01N 35/02

(54) **AUTOMATIC ANALYZER FOR ENZYME IMMUNOASSAYS**
ANALYSEAUTOMAT FÜR ENZYMIMMUNTESTS
ANALYSEUR AUTOMATIQUE POUR DOSAGES IMMUNOENZYMATIQUES

(30) Priority: 05.08.2005 IT BO20050525
(43) Date of publication of application: 16.04.2008
(73) Proprietor: Marcellino, Giuseppe, 95040 Motta Sant'Anastasia (IT)
(72) Inventor: Marcellino, Giuseppe, 95040 Motta Sant'Anastasia (IT)
(74) Representative: Modiano, Micaela Nadia
(86) International application number: PCT/EP2006/064687
(87) International publication number: WO 2007/017384

(56) References cited:
- EP-A- 0 500 506
- EP-A- 1 255 115
- WO-A-00/08472
- US-A- 6 146 591
- US-A1- 2004 161 368
- US-A1- 2005 013 737
- US-B1- 6 353 774

## Description

### Technical Field

The present invention relates to an automatic analyzer for enzyme immunoassays.

### Background Art

Among enzyme immunoassays (EIA), one of the most widely used is the ELISA sandwich (an acronym which stands for "Enzyme-Linked ImmunoSorbent Assays"), which allows to detect and quantify substances such as peptides, proteins, antibodies and hormones.

In an ELISA test, an antigen must be immobilized on the surface of a solid. It is then treated with an antibody, which is generally associated with an enzyme. Detection is achieved by incubating this enzyme complex with a substrate which produces a detectable product. The fundamental element of the detection method is the extremely high specificity of the interaction between the antibody and the antigen.

ELISA assays are usually performed in microplatters provided with a large number of wells which passively bind antibodies and proteins.

The fact that the reagents of the ELISA are immobilized on the surface of the microplatter facilitates enormously the separation of the bound material from the unbound material during the assay. The possibility to wash away all the molecules that have bound nonspecifically makes ELISA a powerful means for measuring individual analytes in a raw extract.

ELISAs in which the antibodies are added in excess are also termed noncompetitive assays, in order to distinguish them from competitive EIAs, which provide for the simultaneous addition of antibodies or proteins in competition with each other.

Noncompetitive ELISA assays ensure a high sensitivity, since even with extremely low concentrations of analyte a large fraction thereof reacts with the excess antibody. However, they are less specific than competitive assays, although the use of monoclonal antibodies and of the so-called sandwich method has increased their specificity considerably.

The most commonly used enzymes are alkaline phosphatase (AP) and peroxidase; other enzymes such as b-galactosidase (bGal) are also used, albeit less widely.

Enzyme activity is measured with spectrophotometric measurement techniques.

Currently commercially available devices that perform this type of analysis have certain functional blocks: a serum dispensing block; a reagent dispensing block; an incubation block; a washing block; a reader block; a data storage and processing block.
US2004/0161368 and EP1255115 disclose the use of a unit comprising a plurality of wells for samples and reagents in the context of assay testing.

The serum dispensing block generally comprises an arm provided with respective actuators for movement along the x, y and z axes and a metallic needle for dispensing into the wells of a microplatter (maximum 96 tests). Serum dispensing occurs by means of a dilution system composed of (at least) one syringe with a plunger tip made of polytetrafluoroethylene (PTFE, Teflon).

The reagent dispensing block utilizes the mechanical system for movement with x, y and z axes of the already-mentioned arm (a single arm is generally used both for sera and for reagents); the reagents are collected by means of an appropriately provided tip (generally but not exclusively made of a material such as plastics) with a process which uses (at least) one syringe with a plunger tip made of polytetrafluoroethylene (PTFE, Teflon). The reagents are then deposited in the respective reaction well of the microplatter, which is in its receptacle.

The incubation block is a system for heating the microplatters in order to bring the reaction to a predefined temperature according to the needs of the kit (from ambient temperature to a maximum of 37°). Said block can be already inserted in the support of the microplatters; otherwise, the apparatus must provide an element for the automated conveyance of the microplatters (this occurs in most cases in order to be able to have simultaneously both ambient-temperature incubation and 37°).

The washing block is composed of a suction pump, an intake pump and a washing head, which in turn is composed of at least 16 nozzles, eight for aspirating the reaction inside the wells and another eight for introducing therein the buffer solution for washing.

Therefore, this system generally entails that it is not possible to wash less than eight wells and that there is a mechanical system dedicated to the movement of the microplatter toward the washing head or vice versa.

The reader block is a photometric apparatus, which is composed of at least one lamp, a system with selective filters and at least one photodetector in order to measure the variation of the absorbance of the reaction in each individual well; it cannot be provided in the receptacle of the microplatters, because it must be kept in the dark (like a darkroom) in order to allow the resetting of the optical system and have no external interference. This block therefore necessarily requires a platter conveyance system.

Finally, the data processing and storage block is composed of a true central computer for loading and checking the data, step-by-step process control, downloading, processing and storage of the results.

Each of said blocks has problems that increase the complexity of use and compromise the precision and correctness of certain analyses performed with the apparatus. First of all, contaminations between one patient and another can occur in the serum dispensing block, since metallic needles are used which provide for washing with particular solutions; the management and execution of these washes entails a considerable cost increase for the apparatus.

In particular, the reagent dispensing block, despite having single-use tips, has a common outlet, which can become blocked easily; moreover, said outlet has metallic components (for example guides for the discharged tip) which can react with the small quantities of solution contained in the discharged tips (which are usually acid). Further, in view of the large number of patients that can be monitored simultaneously, the presence of large tanks is required in order to contain the reagents, with a consequent waste of reagent and a deterioration of its activity in future measurements.

The incubation block entails a movement of the microplatters in order to arrange them in its vicinity; the apparatus must therefore comprise suitable actuators, which are expensive and require periodic maintenance to avoid failures which lead to complete loss of functionality of the apparatus.

The washing block entails that washing is substantially simultaneous for all the wells, with a consequent waste of energy and of washing agents if a single well has been used (and therefore contaminated-dirtied).

The reading block provides for reading in a fixed point of the well: in this manner, an incorrect value may be obtained, since hormone growth can occur unevenly within the well.

Technical problems shared by all currently known devices are the inability to operate in partial mode in case of failures or breakages of certain parts: in fact, even if only one component is damaged, the apparatus is blocked, since the execution of processes occurs in parallel on all the equivalent components; if one of them fails, it cannot be isolated. Substantially, existing devices are scarcely versatile.

### Disclosure of the Invention

The aim of the present invention is to obviate the above-mentioned drawbacks and meet the mentioned requirements, by providing an automatic analyzer for enzyme immunoassays that can operate in reduced mode in case of partial failure.

Within this aim, an object of the present invention is to avoid contaminations and pollution by eliminating the operations for washing the components and the associated costs therewith.

Another object of the present invention is to provide outlets which are difficult to block and are made of inert materials with respect to the reagents used.

Another object of the present invention is to allow the partial washing of the wells, leaving the unused ones unchanged.

A further object of the present invention is to read the wells in a nonpointwise manner, suitable for detecting uneven growths.

Another object of the present invention is to provide an automatic analyzer which is simple, relatively easy to provide in practice, safe in use, effective in operation, and has a relatively low cost.

This aim and these and other objects which will become better apparent hereinafter are achieved by the present automatic analyzer for enzyme immunoassays, of the type that comprises a serum dispensing assembly, a reagent dispensing assembly, an incubation assembly, a washing assembly, a reader assembly and a data processing and storage assembly, characterized in that it comprises a unit for containing at least one well for performing analyses on a serum and at least one test-tube which contains a respective reagent, said unit being accommodated detachably within a respective internal frame of said analyzer, said reagent dispensing assembly, said incubation assembly, said washing assembly and said reader assembly being movable from a first configuration of maximum distance from said unit accommodated in said frame to a second configuration of substantial overlap with at least one portion of said unit.

### Brief Description of the Drawings

Further characteristics and advantages of the invention will become better apparent from the following detailed description of a preferred but not exclusive embodiment of an automatic analyzer for enzyme immunoassays, illustrated by way of non-limiting example in the accompanying drawings, wherein:

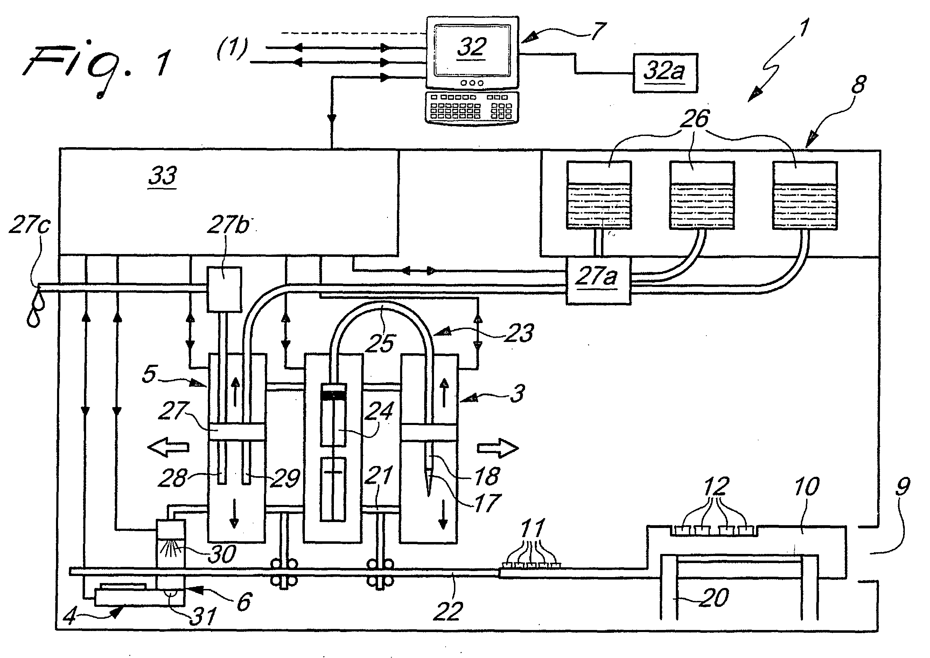

Figure 1 is a schematic side view of an analyzer according to the invention;
Figure 2 is a perspective view of a unit for containing at least one well for performing analyses on a serum of an analyzer according to the invention;
Figure 3 is a schematic side view of the serum dispensing assembly of an analyzer according to the invention.

### Ways of carrying out the Invention

With reference to the figures, the reference numeral 1 generally designates an automatic analyzer for enzyme immunoassays.

The analyzer 1 comprises a serum dispensing assembly 2, a reagent dispensing assembly 3, an incubation assembly 4, a washing assembly 5, a reader assembly 6 and a data processing and storage assembly 7.

The analyzer 1 is constituted by a box-like body 8, inside which said assemblies are installed. It is provided, at the front, with a slot 9 (which may optionally also be closed) for the insertion of a unit 10 for containing at least one well 11 for performing analyses on a serum and at least one test-tube 12 for containing a respective reagent.

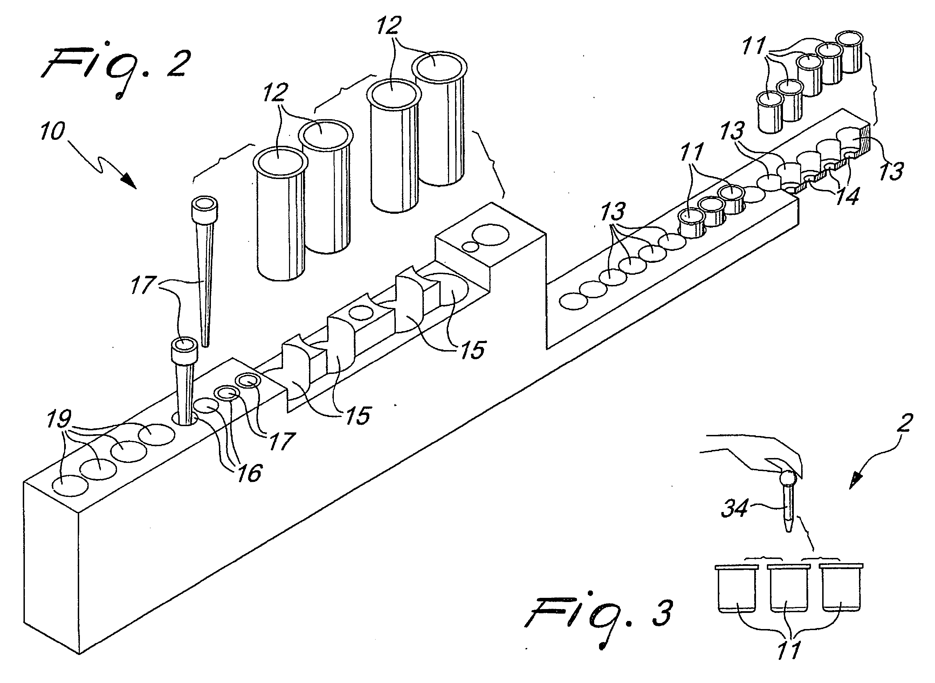

In the embodiment shown in Figure 2, there are fifteen hollows 13, which are adapted to accommodate the wells 11 (they are in the end portion of the unit 10) and have a through hole 14 at their base (which has a smaller diameter than the well 11 that can be accommodated within the hollow 13), while four receptacles 15 are intended to accommodate the test-tubes 12 (they are in the initial portion of the unit 10).

The unit 10 has an elongated shape, since it is constituted substantially by two parallelepipeds, the end one of which (provided with the hollows 13) is shaped like a plate. The hollows 13 and the receptacles 15 are respectively aligned and substantially arranged at the centerline of the unit 10 on said parallelepipeds.

The initial portion of the unit 10 (the one provided with the receptacles 15) also comprises a series of pairs of holes; first holes 16 constitute the seat for the insertion of a respective tip 17 for a dispenser 18 of the reagent dispensing assembly 3, and second holes 19 constitute a discharge recess for every corresponding tip 17 after use.

The unit 10 is accommodated detachably within a respective internal frame 20 of the analyzer 1 in order to be coupled stably to the box-like body 8: the unit 10 has a plate made of ferromagnetic material (not shown in the figure) on its lower surface; said plate, when the unit 10 is accommodated within the frame 20, faces and lies proximate to an electromagnet, the actuation of which ensures the blocking of the unit.

The reagent dispensing assembly 3, the incubation assembly 4, the washing assembly 5 and the reader assembly 6 can move from a first configuration of maximum distance from the unit 10 (accommodated in the frame 20) to a second configuration for substantial overlap on at least one portion of the unit 10.

The reagent dispensing assembly 3, the incubation assembly 4, the washing assembly 5 and the reader assembly 6 are installed so that they can move on a common load-bearing structure 21, which can be moved substantially on a track 22 which is parallel to the unit 10 when it is accommodated within the internal frame 20.

The reagent dispensing assembly 3 comprises at least one pneumatic circuit 23, which is constituted by a cylinder with a corresponding piston 24, to the manifold of which a duct 25 is associated in which the opposite end is connected to the dispenser 18, which can be coupled to the single-use tips 17.

The reagent dispensing assembly 3 comprises a first actuator for translational motion along a substantially vertical axis of the dispenser 18 and a second actuator for moving the piston within the cylinder 24.

The incubation assembly 4 comprises at least one heat source, which can move from an inactive position to least one second position of alignment with at least one of the wells 11 as a consequence of the translational motion of the supporting structure 21 on the track 22.

The heat source has a maximum operating temperature of even more than 40 °C.

The washing assembly 5 comprises a suction pump 27b, a pump 27a for introducing a buffer solution contained within respective containers 26, and a washing head 27, which is constituted by two nozzles 28, 29, of which one 28 is designed to aspirate the reaction into the well 11 and discharge it through a duct 27c externally, and the other one 29 is designed to introduce therein the buffer washing solution.

The reader assembly 6 comprises a light source 30, a filter and a scanning photodetector 31, which are rigidly coupled to the supporting structure 21.

The source 30 and the photodetector 31 are substantially mutually opposite and aligned and are separated by a space adapted for the passage of a portion of the unit that contains the well 11 being considered; the filter is interposed between the source 30 and the photodetector 31.

As a consequence of the translational motion of the supporting structure 21 on the track 22, the scanning photodetector 31 is activated to sense several times, detecting the absorbance value that corresponds to each point of the well 11 that is aligned with it.

The unit 10 is made of a material which is inert with respect to the reagents contained within the test-tubes 12.

The data processing and storage assembly 7 comprises a central computer 32 for control and management, which can be associated with a series of analyzers 1 and can be associated with suitable printing elements 32a.

Each analyzer 1 comprises a respective independent processor 33, which is interfaced with the central computer 32; the processor 33 operates even independently of the central computer 32.

The operating method of an analyzer 1 consists in providing a number of wells 11 equal to the number of patients whose respective serum is to be analyzed with a given test.

It is therefore necessary to dispense the serum of each patient into a respective well 11: this dispensing is performed manually (Figure 3), by using a dosage device 34 provided with single-use interchangeable tips in order to avoid contamination.

The wells 11 that contain the serum must then be arranged on the unit 10, which also accommodates the test-tubes 12 that contain reagents in the amount sufficient to perform all the tests.

A number of single-use tips 17 must be then fitted on the unit for the dispenser 18 of the reagent dispensing assembly 3, in a number that is at least equal to the number of the test-tubes 12.

Once the initial preparation of the unit has been completed, it is necessary to insert it in the internal frame 20 of the analyzer 1, which must then be started.

Within the analyzer 1, the sera remain in incubation in the respective well 11 for a predefined period of time, also with the aid of the incubation assembly 4: the well 11 can optionally be lined internally with substances adapted to facilitate incubation.

Once incubation has occurred, it is necessary (if required by the test) to draw from one of the test-tubes 12, by means of the dispenser 18 with the single-use tip 17, at least one reagent and introduce it in a respective well 11.

It is therefore necessary to incubate again for a predefined period of time the serum and the reagent within the respective well 11.

Once incubation has occurred, the content of the well 11 must be washed and aspirated by means of the washing head 27 of the respective assembly 5.

Depending on the type of test being performed, it may be necessary to perform additional dispensings of reagents, which may even require corresponding incubations for predefined times and at the end of which it is advisable to perform suitable washes to prepare the well 11 for scanning.

When the wells 11 are correctly washed and the liquid that is present inside them has been aspirated completely, it is necessary to scan the surface of each well 11 by means of the reader assembly 6 in order to measure absorbance: said reading is performed by comparing the light signal detected by the photodetector 31 in various points of the well 11 (scanning) and by choosing among the values the one that is most significant (depending on the test being performed).

If the value of absorbance is known, it is possible to calculate the value related to the test performed by comparing this value with standard curves associated with the type of test being performed and with the reagents being used.

It has thus been shown that the invention achieves the proposed aim and objects.

The invention thus conceived is susceptible of numerous modifications and variations, all of which are within the scope of the appended claims.

All the details may further be replaced with other technically equivalent ones.

In the exemplary embodiments shown, individual characteristics, given in relation to specific examples, may actually be interchanged with other different characteristics that exist in other exemplary embodiments.

Moreover, it is noted that anything found to be already known during the patenting process is understood not to be claimed and to be the subject of a disclaimer.

In practice, the materials used, as well as the shapes and the dimensions, may be any according to requirements without thereby abandoning the scope of the protection of the appended claims.

## Claims

1. An automatic analyzer for enzyme immunoassays, of the type that comprises a serum dispensing assembly (2), a reagent dispensing assembly (3), an incubation assembly (4), a washing assembly (5), a reader assembly (6) and a data processing and storage assembly (7), **characterized in that** it comprises a unit (10) for containing at least one well (11) for performing analyses on a serum and at least one test-tube (12) which contains a respective reagent, said unit (10) being accommodated detachably within a respective internal frame (20) of said analyzer (1), said reagent dispensing assembly (3), said incubation assembly (4), said washing assembly (5) and said reader assembly (6) being movable from a first configuration of maximum distance from said unit (10) accommodated in said frame (20) to a second configuration of substantial overlap with at least one portion of said unit (10).

2. The analyzer according to claim 1, **characterized in that** said unit (10) is elongated and comprises an initial parallelepipedal portion provided with a plurality of receptacles (15) for test-tubes (12) of reagent, which are substantially mutually aligned, and a plate-like end portion provided with several hollows (13) for containing wells (11), which are likewise substantially aligned, said reagent test-tubes (12) being substantially small.

3. The analyzer according to claim 2, **characterized in that** said initial portion comprises a series of pairs of holes, the first hole constituting the seat (16) for the insertion of a tip (17) for the dispenser (18) of the reagent dispensing assembly (3), the second hole constituting a recess (19) for discharging said tip (17) after use.

4. The analyzer according to claim 2, **characterized in that** said hollows (13) have their bottom affected by a through hole (14), which has a smaller diameter than said well (11) and can be accommodated within said hollow (13).

5. The analyzer according to claim 1, **characterized in that** said reagent dispensing assembly (3), said incubation assembly (4), said washing assembly (5) and said reader assembly (6) are installed so that they can move on a common supporting structure (21), which can perform substantially a translational motion on a rail (22), which is parallel to said unit (10), when said unit (10) is accommodated in said internal frame (20).

6. The analyzer according to claim 1, **characterized in that** said reagent dispensing assembly (3) comprises at least one pneumatic circuit (23), which is constituted by a cylinder with a corresponding piston (24), with the manifold of which a duct (25) is associated whose opposite end is connected to at least one dispenser (18) which can be coupled to single-use tips (17).

7. The analyzer according to claim 6, **characterized in that** said reagent dispensing assembly (3) comprises a first actuator for translational motion along a substantially vertical axis of said dispenser (18) and a second actuator for moving said piston within said cylinder (24).

8. The analyzer according to claims 1 and 5, **characterized in that** said incubation assembly (4) comprises at least one heat source, which can move from an inactive position to at least one second position for alignment with at least one of said wells (11), following the translational motion of said supporting structure (21) on said rail (22).

9. The analyzer according to claim 8, **characterized in that** said heat source has a maximum operating temperature of even more than 40 °C.

10. The analyzer according to claim 1, **characterized in that** said washing assembly (5) comprises a suction pump (27b), an intake pump (27a) and a washing head (27) constituted by two nozzles (28, 29), of which one (28) is designed to aspirate the reaction into a well (11) and the other one (29) is designed to introduce therein a washing buffer solution.

11. The analyzer according to claims 1 and 5, **characterized in that** said reader assembly (6) comprises a light source (30), a filter and a scanning photodetector (31), which are rigidly coupled to said supporting structure (21), said source (30) and said photodetector (31) being substantially mutually opposite and maligned and separated by a space suitable for the passage of a portion of said unit (10) which contains a well (11) being considered, said filter being interposed between the source (30) and the photodetector (31).

12. The analyzer according to claim 1, **characterized in that**, as a consequence of the translational motion of said supporting structure (21) on said track (22), said scanning photodetector (31) is activated for detection several times, detecting the absorbance value that corresponds to each point of the well (11) that is aligned with it.

13. The analyzer according to one or more of the preceding claims, **characterized in that** said unit (10) is made of a material that is inert with respect to said reagents contained within the test-tubes (12).

14. The analyzer according to claim 1, **characterized in that** said data processing and storage assembly (7) comprises a central computer (32) for control and management, which can also be associated with a series of analyzers (1) which are mutually independent.

15. The analyzer according to claim 14, **characterized in that** each one of said analyzers (1) comprises a respective independent processor (33), which is interfaced with said central computer (32), said respective processor (33) acting also independently of said central computer (32).

16. An operating method of an analyzer according to one or more of the preceding claims, which consists in:
- preparing a number of wells (11) equal to the number of patients whose respective serum is to be analyzed with a given test,
- dispensing the serum of each patient within a respective well (11) with a manual dispenser (34) provided with a respective single use tip,
- arranging on said unit (10) said wells (11) containing the serum,
- arranging on said unit (10) said test-tubes (12) which contain reagents in a quantity sufficient to perform all the tests,
- arranging on said units (10) a number of single-use tips (17) for said dispenser (18) of said reagent dispensing assembly (3) in a number that is at least equal to the number of said test-tubes (12),
- inserting said unit (10) within said internal frame (20) of said analyzer (1),
- starting said analyzer (1).

17. The method according to claim 16, **characterized in that** the starting of said analyzer (1) consists in:
- incubating for a predefined period of time the serum within the respective well (11), also with the aid of the incubation assembly (4), said well (11) being optionally lined internally with substances suitable to facilitate incubation,
- drawing from said test-tube (12), by means of said dispenser (18), with a single-use tip (17), at least one reagent and introducing it in a respective well (11),
- incubating for a predefined period of time the serum and the reagent within the respective well (11),
- washing and aspirating the contents of said well (11) by means of said washing head (27) of the respective assembly (5),
- performing optional additional dispensings of reagents, corresponding incubations and subsequent washes,
- scanning said surface of said well (11) by means of said reader assembly (6) in order to measure absorbance,
- calculating the value related to the test performed as a function of the determined absorbance value.

## Patentansprüche

1. Automatischer Analysator für Enzym-Immuntests des Typs, der eine Serumabgabeanordnung (2), eine Reagenzabgabeanordnung (3), eine Inkubationsanordnung (4), eine Waschanordnung (5), eine Leseranordnung (6) und eine Datenverarbeitungs- und Datenspeicheranordnung (7) umfasst, **dadurch gekennzeichnet, dass** er eine Einheit (10) umfasst, die wenigstens eine Küvette (11) für die Ausführung von Analysen an einem Serum und wenigstens ein Reagenzglas (12), das ein entsprechendes Reagenz enthält, aufweist, wobei die Einheit (10) in einem entsprechenden Innenrahmen (20) des Analysators (1) entnehmbar aufgenommen ist, wobei die Reagenzabgabeanordnung (3), die Inkubationsanordnung (4), die Waschanordnung (5) und die Leseranordnung (6) aus einer ersten Konfiguration mit maximalem Abstand von der in dem Rahmen (20) aufgenommenen Einheit (10) in eine zweite Konfiguration, in der sie mit wenigstens einem Abschnitt der Einheit (10) im Wesentlichen überlappen, beweglich sind.

2. Analysator nach Anspruch 1, **dadurch gekennzeichnet, dass** die Einheit (10) lang gestreckt ist und einen anfänglichen parallelepipedförmigen Abschnitt, der mit mehreren Aufnahmebehältern (15) für das Reagenz enthaltende Reagenzgläser (12) versehen ist, die im Wesentlichen aufeinander ausgerichtet sind, und einen plattenähnlichen Endabschnitt, der mit mehreren Hohlräumen (13) versehen ist, um Küvetten (11) aufzunehmen, die auf ähnliche Weise im Wesentlichen aufeinander ausgerichtet sind, umfasst, wobei die das Reagenz enthaltenden Reagenzgläser (12) im Wesentlichen klein sind.

3. Analysator nach Anspruch 2, **dadurch gekennzeichnet, dass** der Anfangsabschnitt eine Reihe von Paaren von Löchern umfasst, wobei das erste Loch den Sitz (16) für das Einsetzen einer Spitze (17) für den Spender (18) der Reagenzabgabeanordnung (3) bildet und das zweite Loch eine Aussparung (19) zum Ausstoßen der Spitze (17) nach der Verwendung bildet.

4. Analysator nach Anspruch 2, **dadurch gekennzeichnet, dass** die Hohlräume (13) in ihrem Boden ein Durchgangsloch (14) aufweisen, das einen kleineren Durchmesser als die Küvette (11) hat und in dem Hohlraum (13) aufgenommen werden kann.

5. Analysator nach Anspruch 1, **dadurch gekennzeichnet, dass** die Reagenzabgabeanordnung (3), die Inkubationsanordnung (4), die Waschanordnung (5) und die Leseranordnung (6) so installiert sind, dass sie sich auf einer gemeinsamen Tragstruktur (21) bewegen können, die eine im Wesentlichen translatorische Bewegung auf einer Schiene (22) ausführen kann, die zu der Einheit (10) parallel ist, wenn die Einheit (10) in dem Innenrahmen (20) aufgenommen ist.

6. Analysator nach Anspruch 1, **dadurch gekennzeichnet, dass** die Reagenzabgabeanordnung (3) wenigstens einen Druckluftkreis (23) umfasst, der durch einen Zylinder mit einem entsprechenden Kolben (24) gebildet ist, dessen Verteiler einer Rohrleitung (25) zugeordnet ist, deren gegenüberliegendes Ende mit wenigstens einem Spender (18) verbunden ist, der mit Einmalspitzen (17) gekoppelt werden kann.

7. Analysator nach Anspruch 6, **dadurch gekennzeichnet, dass** die Reagenzabgabeanordnung (3) einen ersten Aktor für die translatorische Bewegung längs einer im Wesentlichen vertikalen Achse des Spenders (18) und einen zweiten Aktor für die Bewegung des Kolbens im Zylinder (24) umfasst.

8. Analysator nach den Ansprüchen 1 und 5, **dadurch gekennzeichnet, dass** die Inkubationsanordnung (4) wenigstens eine Wärmequelle umfasst, die sich aus einer inaktiven Position in wenigstens eine zweite Position, in der sie auf wenigstens eine der Küvetten (11) ausgerichtet ist, bewegen kann und der translatorischen Bewegung der Tragstruktur (21) auf der Schiene (22) folgt.

9. Analysator nach Anspruch 8, **dadurch gekennzeichnet, dass** die Wärmequelle eine maximale Betriebstemperatur von mehr als 40 °C hat.

10. Analysator nach Anspruch 1, **dadurch gekennzeichnet, dass** die Waschanordnung (5) eine Absaugpumpe (27b), eine Ansaugpumpe (27a) und einen Waschkopf (27), der durch zwei Düsen (28, 29) gebildet ist, wovon eine (28) dazu ausgelegt ist, das Reagenz in die Küvette (11) zu saugen, und die andere (29) dazu ausgelegt ist, eine Waschpufferlösung in die Küvette einzuleiten, umfasst.

11. Analysator nach den Ansprüchen 1 und 5, **dadurch gekennzeichnet, dass** die Leseranordnung (6) eine Lichtquelle (30), ein Filter und einen Abtast-Photodetektor (31) umfasst, die mit der Tragstruktur (21) starr gekoppelt sind, wobei sich die Quelle (30) und der Photodetektor (31) im Wesentlichen einander gegenüber befinden und aufeinander ausgerichtet sind und durch einen Zwischenraum getrennt sind, durch den sich ein Abschnitt der Einheit (10) bewegen kann, die eine betrachtete Küvette (11) enthält, wobei das Filter zwischen die Quelle (30) und den Photodetektor (31) eingefügt ist.

12. Analysator nach Anspruch 1, **dadurch gekennzeichnet, dass** als Folge der translatorischen Bewegung der Tragstruktur (21) auf der Schiene (22) der Abtast-Photodetektor (31) aktiviert wird, um mehrere Detektionen vorzunehmen, wodurch der Wert der Extinktion detektiert wird, der jedem Punkt der Küvette (11) entspricht, die auf ihn ausgerichtet ist.

13. Analysator nach einem oder mehreren der vorhergehenden Ansprüche, **dadurch gekennzeichnet, dass** die Einheit (10) aus einem Material hergestellt ist, das in Bezug auf die Reagenzien, die in den Reagenzgläsern (12) enthalten sind, reaktionsträge ist.

14. Analysator nach Anspruch 1, **dadurch gekennzeichnet, dass** die Datenverarbeitungs- und Datenspeicheranordnung (7) einen Zentralcomputer (32) für die Steuerung und das Management umfasst, denen auch eine Reihe von Analysatoren (1) zugeordnet sein kann, die voneinander unabhängig sind.

15. Analysator nach Anspruch 14, **dadurch gekennzeichnet, dass** jeder der Analysatoren (1) einen jeweiligen unabhängigen Prozessor (33) umfasst, der über eine Schnittstelle mit dem Zentralcomputer (32) verbunden ist, wobei der jeweilige Prozessor (33) unabhängig von dem Zentralcomputer (32) arbeitet.

16. Verfahren zum Betreiben eines Analysators nach einem oder mehreren der vorhergehenden Ansprüche, das umfasst:
- Bereitstellen einer Anzahl von Küvetten (11), die gleich der Anzahl von Patienten ist, deren jeweiliges Serum durch einen gegebenen Test analysiert werden soll,
- Abgeben des Serums jedes Patienten in eine entsprechende Küvette (11) mit einem manuellen Spender (34), der mit einer entsprechenden Einmalverwendungsspitze versehen ist,
- Anordnen der das Serum enthaltenden Küvetten (11) auf der Einheit (10),
- Anordnen der Reagenzgläser (12), die Reagenzien in einer für die Ausführung aller Tests ausreichenden Menge enthalten, auf der Einheit (10),
- Anordnen einer Anzahl von Einmalverwendungsspitzen (17) für den Spender (18) der Reagenzabgabeanordnung (3) in einer Anzahl, die wenigstens gleich der Anzahl der Reagenzglase (12) ist, auf den Einheiten (10),
- Einsetzen der Einheit (10) in den Innenrahmen (20) des Analysators (1),
- Starten des Analysators (1).

17. Verfahren nach Anspruch 16, **dadurch gekennzeichnet, dass** das Starten des Analysators (1) umfasst:
- Inkubieren des Serums in der entsprechenden Küvette (11) für eine im Voraus definierte Zeitdauer auch mit der Unterstützung der Inkubationsanordnung (4), wobei die Küvette (11) optional innen mit Substanzen verkleidet ist, die die Inkubation erleichtern können,
- Saugen wenigstens eines Reagenzes aus dem Reagenzglas (12) mittels des Spenders (18) mit einer Einmalverwendungsspitze (17) und Einleiten des Reagenzes in eine entsprechende Küvette (11),
- Inkubieren des Serums und des Reagenzes in der entsprechenden Küvette (11) für eine im Voraus definierte Zeitdauer,
- Waschen und Ansaugen der Inhalte der Küvette (11) mittels des Waschkopfes (27) der jeweiligen Anordnung (5),
- Ausführen optionaler zusätzlicher Abgaben von Reagenzien entsprechend Inkubationen und nachfolgenden Waschvorgängen,
- Abtasten der Oberfläche der Küvette (11) mittels der Leseranordnung (6), um die Extinktion zu messen,
- Berechnen des Wertes, der mit dem ausgeführten Test in Beziehung steht, als Funktion des bestimmten Wertes für die Extinktion.

## Revendications

1. Analyseur automatique pour des immunoessais d'enzymes, du type qui comporte un ensemble de distribution de sérum (2), un ensemble de distribution de réactif (3), un ensemble d'incubation (4), un ensemble de lavage (5), un ensemble de lecture (6) et un ensemble de traitement et de mémorisation de données (7), **caractérisé en ce qu'**il comporte une unité (10) pour contenir au moins un puits (11) pour effectuer des analyses sur un sérum et au moins un tube à essai (12) qui contient un réactif respectif, ladite unité (10) étant contenue de manière amovible dans un bâti interne respectif (20) dudit analyseur (1), ledit ensemble de distribution de réactif (3), ledit ensemble d'incubation (4), ledit ensemble de lavage (5) et ledit ensemble de lecture (6) étant mobiles depuis une première configuration de distance maximale par rapport à ladite unité (10) contenue dans ledit bâti (20) jusqu'à une seconde configuration chevauchant en grande partie au moins une partie de ladite unité (10).

2. Analyseur selon la revendication 1, **caractérisé en ce que** ladite unité (10) est allongée et comporte une partie parallélépipédique initiale munie d'une pluralité de réceptacles (15) pour des tubes à essai (12) de réactif, lesquels sont sensiblement mutuellement alignés, et une partie d'extrémité de type plaque ayant plusieurs cuvettes (13) pour contenir des puits (11), lesquels sont alignés sensiblement de manière identiques, lesdits tubes à essai de réactif (12) étant sensiblement petits.

3. Analyseur selon la revendication 2, **caractérisé en ce que** ladite partie initiale comporte une série de paires de trous, ledit premier trou constituant le support (16) pour l'insertion d'un embout (17) pour le dispositif de distribution (18) de l'ensemble de distribution de réactif (3), le second trou constituant un évidement (19) pour décharger ledit embout (17) après utilisation.

4. Analyseur selon la revendication 2, **caractérisé en ce que** ladite partie inférieure des cuvettes (13) présente un trou traversant (14), lequel a un diamètre plus petit que ledit puits (11) et peut être contenu dans ladite cuvette (13).

5. Analyseur selon la revendication 1, **caractérisé en ce que** ledit ensemble de distribution de réactif (3), ledit ensemble d'incubation (4), ledit ensemble de lavage (5) et ledit ensemble de lecture (6) sont installés de sorte qu'ils peuvent se déplacer sur une structure de support commune (21), laquelle peut effectuer en grande partie un déplacement par translation sur un rail (22), lequel est parallèle à ladite unité (10), lorsque ladite unité (10) est contenue dans ledit bâti interne (20).

6. Analyseur selon la revendication 1, **caractérisé en ce que** ledit ensemble de distribution de réactif (3) comporte au moins un circuit pneumatique (23), lequel est constitué par un cylindre ayant un piston correspondant (24), au collecteur duquel est associé un conduit (25) dont l'extrémité opposée est connectée à au moins un dispositif de distribution (18) lequel peut être couplé à des embouts à utilisation unique (17).

7. Analyseur selon la revendication 6, **caractérisé en ce que** ledit ensemble de distribution de réactif (3) comporte un premier actionneur pour un déplacement par translation le long d'un axe sensiblement vertical dudit dispositif de distribution (18) et un second actionneur pour déplacer ledit piston dans ledit cylindre (24).

8. Analyseur selon les revendications 1 et 5, **caractérisé en ce que** ledit ensemble d'incubation (4) comporte au moins une source de chaleur, laquelle peut se déplacer d'une position inactive vers au moins une seconde position en vue d'un alignement avec au moins l'un desdits puits (11), à la suite du déplacement par translation de ladite structure de support (21) sur ledit rail (22).

9. Analyseur selon la revendication 8, **caractérisé en ce que** ladite source de chaleur a une température de fonctionnement maximum de plus de 40 °C.

10. Analyseur selon la revendication 1, **caractérisé en ce que** ledit ensemble de lavage (5) comporte une pompe d'aspiration (27b), une pompe d'admission (27a) et une tête de lavage (27) constituée par deux buses (28, 29), dont l'une (28) est conçue pour aspirer la réaction dans un puits (11) et l'autre (29) est conçue pour introduire dans celle-ci une solution de tampon de lavage.

11. Analyseur selon les revendications 1 et 5, **caractérisé en ce que** ledit ensemble de lecture (6) comporte une source de lumière (30), un filtre et un photodétecteur à balayage (31), lesquels sont couplés de manière rigide à ladite structure de support (21), ladite source (30) et ledit photodétecteur (31) étant sensiblement mutuellement opposés et alignés et séparés par un espace approprié pour le passage d'une partie de ladite unité (10) qui contient un puits (11) pris en considération, ledit filtre étant interposé entre la source (30) et le photodétecteur (31).

12. Analyseur selon la revendication 1, **caractérisé en ce que**, en conséquence du déplacement par translation de ladite structure de support (21) sur ledit rail (22), ledit photodétecteur à balayage (31) est activé en vue d'une détection plusieurs fois, détectant la valeur d'absorbance qui correspond à chaque point du puits (11) qui est aligné sur celui-ci.

13. Analyser selon une ou plusieurs des revendications précédentes, **caractérisé en ce que** ladite unité (10) est constituée d'un matériau qui est inerte par rapport auxdits réactifs contenus dans les tubes à essai (12).

14. Analyseur selon la revendication 1, **caractérisé en ce que** ledit ensemble de traitement et de mémorisation de données (7) comporte un ordinateur central (32) pour la commande et la gestion, lequel peut également être associé à une série d'analyseurs (1) qui sont mutuellement indépendants.

15. Analyser selon la revendication 14, **caractérisé en ce que** chacun desdits analyseurs (1) comporte un processeur indépendant respectif (33), lequel est interface avec ledit ordinateur central (32), ledit processeur respectif (33) agissant également indépendamment dudit ordinateur central (32).

16. Procédé opérationnel d'un analyseur conformément à une ou plusieurs des revendications précédentes, lequel comporte les étapes consistant à :
- préparer un certain nombre de puits (11) égaux au nombre de patients dont le sérum respectif doit être analysé à l'aide d'un test de données,
- distribuer le sérum de chaque patient dans un puits respectif (11) à l'aide d'un dispositif de distribution manuel (34) muni d'un embout à utilisation unique respectif,
- agencer sur ladite unité (10) ledit puits (11) contenant le sérum,
- agencer sur ladite unité (10) lesdits tubes à essai (12) qui contiennent des réactifs en quantité suffisante pour réaliser tous les tests,
- agencer sur lesdites unités (10) un nombre d'embouts à utilisation unique (17) pour ledit dispositif de distribution (18) dudit ensemble de distribution de réactif (3) qui est au moins égal au nombre desdits tubes à essai (12),
- insérer ladite unité (10) dans ledit bâti interne (20) dudit analyseur (1),
- lancer ledit analyser (1).

17. Procédé selon la revendication 16, **caractérisé en ce que** le lancement dudit analyseur (1) comporte les étapes consistant à :
- incuber pendant une période de temps prédéfinie le sérum dans le puits respectif (11), également à l'aide de l'ensemble d'incubation (4), ledit puits (11) contenant de manière facultative en interne des substances appropriées pour faciliter l'incubation,
- retirer dudit tube à essai (12), par l'intermédiaire dudit dispositif de distribution (18), ayant un embout à utilisation unique (17), au moins un réactif et introduire celui-ci dans un puits respectif (11),
- incuber pendant une période de temps prédéfinie le sérum et le réactif dans le puits respectif (11),
- laver et aspirer le contenu dudit puits (11) par l'intermédiaire de ladite tête de lavage (27) de l'ensemble respectif (5),
- effectuer des distribuions supplémentaire facultatives de réactifs, des incubations correspondantes et des lavages ultérieurs,
- balayer ladite surface dudit puits (11) par l'intermédiaire dudit ensemble de lecture (6) afin de mesurer l'absorbance,
- calculer la valeur associée au test effectué en fonction de la valeur d'absorbance déterminée.
